**Europäisches Patentamt**

**European Patent Office**

**Office européen des brevets**

(19)

(11) Veröffentlichungsnummer : **0 391 071 B1**

(12)

# EUROPÄISCHE PATENTSCHRIFT

(45) Veröffentlichungstag der Patentschrift :
**18.08.93 Patentblatt 93/33**

(51) Int. Cl.$^5$ : **B65G 1/06**, B65G 1/08

(21) Anmeldenummer : **90104065.9**

(22) Anmeldetag : **02.03.90**

(54) **Vorrichtung zum Fördern und zur Regulierung des Förderverlaufs von Rollpaletten.**

(30) Priorität : **07.04.89 DE 3911275**

(43) Veröffentlichungstag der Anmeldung :
**10.10.90 Patentblatt 90/41**

(45) Bekanntmachung des Hinweises auf die
Patenterteilung :
**18.08.93 Patentblatt 93/33**

(84) Benannte Vertragsstaaten :
**AT BE CH DE DK ES FR GB GR IT LI LU NL SE**

(56) Entgegenhaltungen :
**EP-A- 0 151 742**
**DE-B- 2 622 017**
**US-A- 3 744 621**

(73) Patentinhaber : **ZÜBLIN-SYSTEMTECHNIK
GMBH FÜR LAGER- UND
TRANSPORTANLAGEN
Albstadtweg 1
D-70567 Stuttgart (DE)**

(72) Erfinder : **Poutet, Jean-Claude
Balinger Strasse 63
D-7000 Stuttgart 80 (DE)**

(74) Vertreter : **Patentanwälte Meinke,
Dabringhaus und Partner
Postfach 10 46 45
D-44046 Dortmund (DE)**

**Beschreibung**

Die Erfindung richtet sich auf eine Vorrichtung zum Fördern und zur Regulierung des Förderverlaufes von Rollpaletten bzw. Rolluntersätzen nach dem Oberbegriff des Anspruche 1

Es sind eine Reihe von Vorrichtungen zum Fördern von Rollpaletten bekannt, beispielsweise die DE-C-26 22 017, die einen zwischen den Schienen verlegten Förderbalken offenbart mit klinkenförmigen, federbelasteten Schubhebeln, die sich an Quertraversen der Paletten zum Fördern in Schubrichtung anlegen. Aus der DE-A-30 37 634 ist eine Einrichtung bekannt, die an einer Schubstange aufrichtbare stabförmige Mitnehmer zeigt, die bei der Bewegung in dem Bereich der Paletten eingreifen und sich an diesen anlegen, um dann in einer Richtung fördern zu können. Die DE-A-21 52 904 zeigt eine vergleichbare Lösung bei Durchlaufregalen, wobei Endlosförderer mit hebelförmigen Mitnehmern ausgerüstet sind, um über Zugglieder die im Regal befindlichen Rollpaletten zu bewegen.

Eine von klinkenartigen Fördermitteln abweichende Konstruktion zeigt die CH-A-628 852. Hier wird ein rollengelagertes Hubelement in Förderrichtung über Keilschrägen und entsprechende Rollwalzen angehoben und legt sich in seiner Gesamtlänge unter die Palette und hebt diese dann insgesamt an, um sie schrittweise voranzufördern. Dabei übernimmt diese Fördereinrichtung das Gesamtgewicht der Palette. Schließlich zeigt die US-A-3 931 883 einen Pendelwalzenförderer der über eine Pendelbewegung mittels einer Antriebsrolle auf Rollen verschiebbare Teile bewegen kann.

Ein wesentlicher Nachteil aller mit Klinken arbeitenden Schubeinrichtungen besteht darin, daß an sich nur Stoßbetrieb möglich ist, d.h. die Klinken laufen vergleichsweise hart auf entsprechende Anschlagteile der Paletten auf und beschleunigen diese ruckartig. Bei einigen Lösungen ist auch bei dem Rückhub der Antriebselemente nicht gewährleistet, daß diese dann sofort aus dem Bewegungspunkt der Paletten herausgenommen sind, vielmehr legen die Paletten mit Anschlagelementen, z.B. mit Querstangen oder dgl., die Schubhebel um, dies erzeugt nicht nur vergleichsweise viel Lärm, sondern beansprucht auch die entsprechenden Teile überdurchschnittlich.

Zwar gibt es Lösungen, die auch diesen Nachteil beheben, etwa die obengenannte schweizer Patentschrift, die aber im Sinne der vorliegenden Erfindung den erheblichen Nachteil hat, daß es sich dabei um ein Hubelement handelt, was allerdings bei dem Rückhub aus dem Bewegungspunkt der Paletten herausgenommen ist, d.h. auch herausgenommen sein muß, um überhaupt funktionsfähig zu sein.

In der Praxis hat sich auch gezeigt, daß es durchaus vorkommen kann, daß nur ein Mitnehmer in einer Kolonne von aneinandergereihten Rollpaletten an einer Quertraverse anschlägt und dadurch den alleinigen Bewegungsimpuls für die gesamte Kolonne abgibt. Es ist somit zum einen sehr schwierig, den Förderverlauf einzelner Paletten vorauszusagen und zum anderen kann das harte Aufprallen von Rollpaletten aneinander nicht vermieden werden. Beim Einsatz von mehreren Rollpalettentypen in ein und derselben Förderstrecke, insbesondere von Rollpaletten unterschiedlicher Länge bzw. Rollpaletten, auf denen sich unterschiedliche Ladungen mit unterschiedlichen Überständen befinden, verschärft sich die hier beschriebene Problematik. Ein zu lösendes Problem besteht daher darin, in einem Kanallager gleichmäßig mit möglichst identischen Impulsen die Kolonne von aneinandergereihten Rollpaletten bewegen zu können, ohne daß es zu Stoßförderungen kommt und damit zu ungewollten Belastungen.

Aufgabe der Erfindung ist daher die Schaffung einer Lösung, mit der in entsprechenden Lagern Rollpaletten in einfacher Weise gefördert werden können, bei gleichmäßigem Förderverlauf einzelner Paletten ohne erheblichen mechanischen Aufwand mit sanfter Beanspruchung der kontaktierenden Elemente aneinander.

Diese Aufgabe wird mit einer Vorrichtung der eingangs bezeichneten Art dadurch gelöst, daß gemäß kennseichen der Anspruchs 1 die Schubelemente als in der Förderbewegung die untere ebene Fläche der Paletten kontaktierende, elastische Walzen ausgebildet sind, wobei diese Walzen in Schubrichtung in ihrer Rollbewegung von die Walzen kontaktierenden Sperren gehindert sind.

Die mit der Erfindung erzielbaren Vorteile bestehen insbesondere darin, daß eine mit Walzen bestückte Stange in der angegebenen Weise ein sanftes Kontaktieren ebenso möglich macht, wie eine einfache Steuerung der Stange zur Bewegung in Richtung des Kontaktes wie auch aus dem kontaktierenden Eingriff. Die hier beanspruchte Lösung ist auch für robusten Betrieb geeignet, da alle Elemente stark beansprucht werden können, ohne ihre Funktionsfähigkeit aufzugeben. Dabei werden Vorteile von Kontaktierungswalzen mit den Vorteilen von Steuer- und Schubstangen in besonders günstiger Weise miteinander kombiniert.

In Ausgestaltung ist vorgesehen, daß die Sperren als bewegbare, in Kontakt mit den elastischen Rollen bringbare Keil-Anschläge ausgebildet sind.

Diese Lösung hat ganz entscheidende Vorteile, insbesondere kann aufgrund der den jeweiligen Anforderungen anpaßbaren Keilschrägen die Bremswirkung von vornherein gesteuert werden, auch ergibt sich über das Abbremsen über Keilschrägen ein sehr sanftes Stoppen der Rollen, sobald sie mit den Palettenunterflächen in Kontakt kommen, was zur Lösung der eingangs genannten Aufgabe in besonders vorteilhafter Weise

2

beiträgt.

Die Erfindung sieht auch vor, daß die Keil-Anschläge an einer getrennt zur Schubstange individuell bewegbaren Steuerstange angeordnet sind.

Dadurch, daß die mit den elastischen Walzen bestückte Stange aus einer Schubstange und einer Steuerstange besteht, läßt sich deren Steuerung und Antrieb besonders vereinfachen, was wiederum dazu führen kann, daß die besondere Art der Förderung und Abbremsung der Paletten vereinfacht wird.

Die Erfindung sieht auch vor, daß die elastischen Walzenhülsen eines Bolzenträgers an der Schubstange gelagert sind, wobei der Bolzen einen kleineren Durchmesser als der wirksame Innendurchmesser der Walzennabel aufweist. Mit dieser Lösung wird insbesondere erreicht, daß die Walze ohne große Probleme außer Eingriff mit einer Kontaktfläche gelangen kann, wenn sie nicht von zusätzlichen Kräften beaufschlagt ist, was beispielsweise durch das Abrollen an den Keilschrägen geschehen kann.

Umgekehrt können die Walzen noch mittels einer Feder an der Schubstange gelagert sein, derart, daß die Feder die Walze in der unbelasteten Lage nach oben in die Kontaktfläche zur Palette hebt, so daß beispielsweise bei Auflaufen einer Palette über eine sehr gering geneigte Führungsbahn ein gewisser erster Abbremsungseffekt und damit eine sehr sanfte Handhabung der Palette erreichbar ist.

Die Erfindung sieht auch vor, daß jeder Walze eine bremskräftige Wirkung sich gegenüberliegender weiterer Art zugeordnet ist, wobei es sich hierbei um z.B. eine Anschlagrolle bzw. einen zusätzlichen Bremsbolzen handeln kann oder aber auch um einen symmetrisch zum ersten Keilanschlag angeordneten weiteren Keilanschlag handeln kann.

Die Einrichtung kann dabei so getroffen sein, daß jede Walze an der individuell bewegbaren Schubstange angeordnet ist und das die gegenüberliegenden, jederseits zugeordneten beiden entgegengesetzt geneigten Keilanschläge an der Steuerstange vorgesehen sind, wobei jede Walze mittels einer Feder in Kontaktrichtung auf die Palettenunterseite hin beaufschlagt ist.

Mit der letztgenannten Gestaltung läßt sich in besonders zweckmäßiger Weise eine gleichwirkende Schubbewegung in beiden Schubrichtungen innerhalb einer Regalförderstrecke erreichen, d.h. das identische Element kann in Füllrichtung eines Regalfaches wie auch in Entnahmerichtungen arbeiten, ohne daß es dazu weiterer Manipulationen bedarf, da die Walzen entweder in der einen oder der anderen Umlaufrichtung sperrbar sind.

Nach der Erfindung ist auch vorgesehen, daß die elastische Walze eine Nabe und einen die Nabe umgebenden elastischen Belag aufweist.

Zweckmäßig kann es sein, wenn die Walzen aus einem gut gleitenden Kunststoffmaterial bestehen und die Beläge der Walzen aus einem elastischen Material, was zu sehr guten Kontakten führt hier besonders sanft und stoßfrei.

Die Erfindung ist nachstehend anhand der Zeichnung beispielsweise näher erläutert. Diese zeigt in

Fig. 1       eine schematische Teilansicht einer erfindungsgemäßen Vorrichtung nach einem ersten Ausführungsbeispiel, die in einem Durchlaufregallager eingesetzt ist,

Fig. 2       eine Seitenansicht einer elastischen Walze in Ruhestellung,

Fig. 3       Schnitt durch die elastische Walze in Fig. 2,

Fig. 4       eine Seitenansicht einer elastischen Walze, die von einer Rollpalette überfahren wird,

Fig. 5       eine Seitenansicht einer elastischen Walze, die eine Rollpalette fördert,

Fig. 6 - 9    Förderposition einer Rollpalette in verschiedenen Stadien.

Fig. 10      eine isometrische Teilansicht einer erfindungsgemäßen Vorrichtung nach einem zweiten Ausführungsbeispiel, die in einem Kanallager eingesetzt ist,

Fig. 11      eine Seitenansicht einer elastischen Walze in Grundstellung,

Fig. 12      Seitenansicht einer elastischen Walze während eines Leerhubes,

Fig. 13      die elastische Walze im Detail,

Fig. 14      die Entnahme einer Rollpalette in verschiedenen Stadien dargestellt,

Fig. 15      eine Seitenansicht einer erfindungsgemäßen Vorrichtung im Teilschnitt nach einem dritten Ausführungsbeispiel sowie in

Fig. 16      einen Schnitt durch die Vorrichtung gemäß Darstellung Fig. 15 gemäß Pfeil XVI-XVI in Fig. 15.

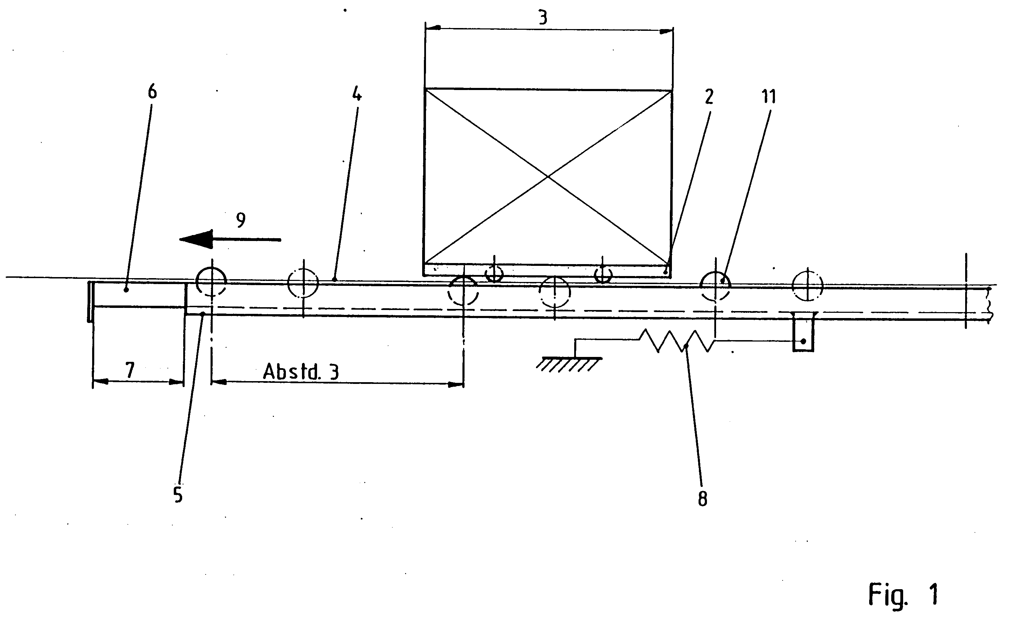

Zunächst sei das Ausführungsbeispiel gemäß den Figuren 1 bis 9 dargestellt:

Die schematisierte Teilansicht eines Regales in Fig. 1 zeigt eine Rollpalette 2, die auf Laufschienen 4 befördert wird. Zwischen den Laufschienen 4 ist eine Führung 5 angeordnet, in der sich eine Stange 6 befindet. Die Hublänge 7 der Stange 6 steht unter der Wirkung einer Zugfeder 8. Die Stange 6 ist in Fig. 1 in ihrer Ruhestellung.

Die Stange 6 ist mit einer Anzahl von elastischen Walzen 11 versehen. In diesem Fall beträgt der Abstand zwischen den elastischen Walzen 11 eine Rollpalettenlänge 3.

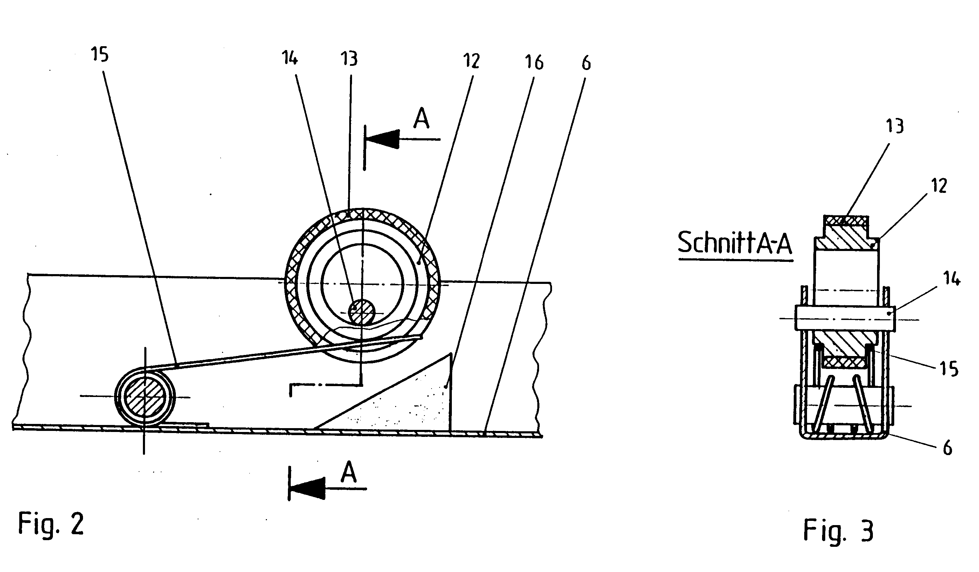

Die elastische Walze 11 wird anhand der Fig. 2 und 3 näher erläutert. Sie besteht in dieser Ausführungsform aus einer Nabe 12 aus Kunststoff, die mit einem elastischen Belag 13 in Form eines Elastomerringes umgeben ist. Die Walze 11 ist mittels eines Bolzens 14 an der Stange 6 frei drehbar gelagert. Da der Innendurchmesser der Nabe 12 größer ist als der Durchmesser des Bolzens 14 ist ein gewisses Spiel vorhanden. Die elastische Walze 11 sitzt mit der Nabe 12 auf einer Feder 15, die mit der Stange 6 fest verbunden ist. Die Feder drückt die elastische Walze 11 nach oben.

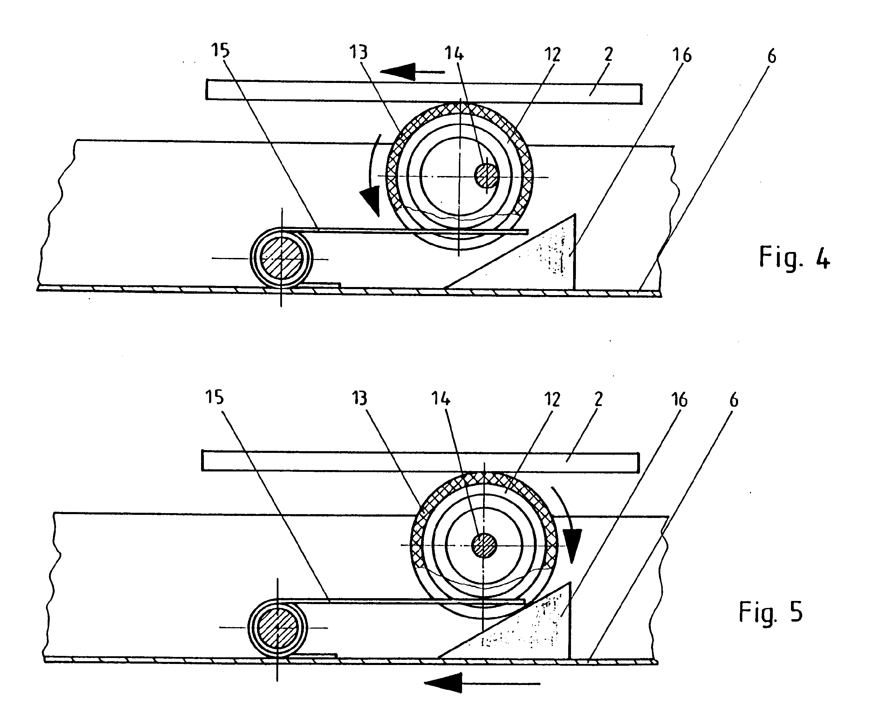

Fig. 3 zeigt einen Schnitt durch die eben beschriebene elastische Walze 11 in Ruhestellung. In Fig. 4 fährt eine Rollpalette über die elastische Walze 11. Die elastische Walze 11, die von der Feder 15 gegen die Rollpalette 2 gedrückt wird, dreht sich frei in Förderrichtung 9 und bewirkt eine gewisse Verzögerung der Rollpalette 2. Nach dem Überfahren mehrerer elastischer Walzen 11, kommt eine Rollpalette 2 somit zum Anhalten.

Die elastische Walze 11 verhält sich in gleicher Weise, wenn die Stange 6 entgegen der Förderrichtung 9 angetrieben wird.

In Fig. 5 wird die Stange 6 in ihre Ausgangsstellung zurückgeführt. Die elastische Walze 11, die sich unter einer Rollpalette 2 befindet, bewegt sich entgegengesetzt zur Förderrichtung 9 und wird durch den Anschlag 16 gesperrt. Die auf der elastischen Walze 11 liegende Rollpalette 2 wird somit um die Hublänge 7 der Stange 6 in Förderrichtung 9 weitergefördert.

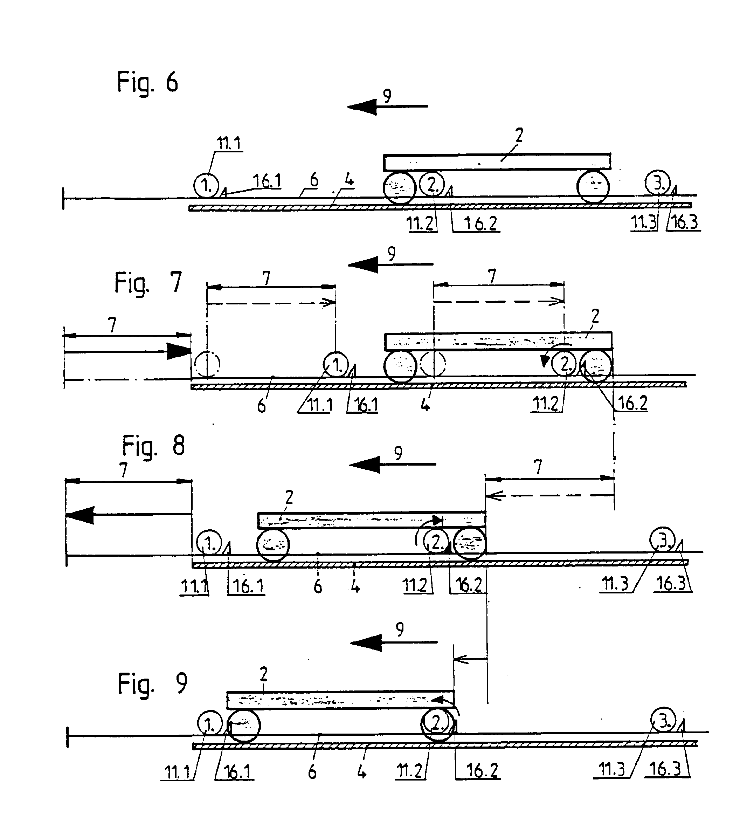

In den Fig. 6 bis 9 wird das Fördern einer Rollpalette 2 mit der erfindungsgemäßen Vorrichtung dargestellt:

Fig. 6 eine sich nicht bewegende Rollpalette 2 soll weitergefördert werden. Eine elastische Walze 11.2 befindet sich unter der Rollpalette 2. Die Stange 6 ist in ihrer Ruhestellung.

Fig. 7 die Stange 6 ist entgegen der Förderrichtung 9 um eine Hublänge 7 angetrieben worden. Die elastischen Walzen 11.1, 11.2, 11.3 die an der Stange 6 gelagert sind, werden somit auch um eine Hublänge 7 entgegen der Förderrichtung 9 verschoben. Bei diesem Vorgang dreht sich die elastische Walze 11.2, die sich unter der Rollpalette 2 befindet, frei in Förderrichtung 9.

Fig. 8 die Stange 6 kehrt unter der Wirkung einer Feder 8 (nicht dargestellt) in ihre Ruhestellung zurück. Die elastische Walze 11.2, die sich unter der Rollpalette 2 befindet, wird durch den Anschlag 16.2 gesperrt. Die Rollpalette 2 wird somit um die Hublänge 7 an der Stange 6 in Förderrichtung 9 weitergefördert.

Fig. 9 die schon angetriebene Rollpalette 2 läuft solange weiter, bis sie entweder am Ziel angelangt ist oder durch die Verzögerungswirkung der elastischen Walzen 11.2, und 11.1, die sich überfährt, anhält.

Das erneute Antreiben der Stange 6 wiederholt den oben beschriebenen Vorgang.

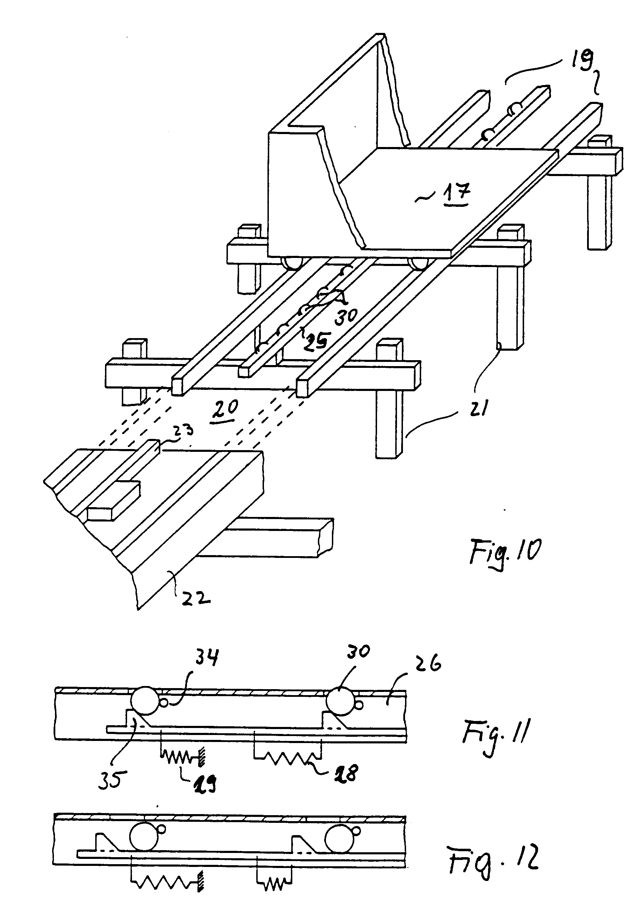

Die Figuren 10 bis 14 zeigen ein weiteres Ausführungsbeispiel der Erfindung, wobei hier zur Vereinfachung der Beschreibung eine fortlaufende Numerierung gewählt wurde, so daß es zur Doppelbezifferung an sich technisch, identischer Teile kommen kann, hierzu sei auch auf die Bezugszeichenliste verwiesen.

Die perspektivische Teilansicht eines Kanals 20 eines Kanallagers 21 in Fig. 10 zeigt eine Rollpalette 17, die auf Laufschienen 19 in einem Einschublager 21 befördert wird.

Zwischen den Laufschienen 19 ist eine Stange 25 angeordnet. Die Stange 25 besteht aus einer Hauptstange 26 und einer darin integrierten Steuerstange 27. Die Hauptstange 26 und die Steuerstange 27 sind durch eine Zugfeder 28 miteinander verbunden. Die Steuerstange 27 wiederum steht unter der Wirkung der Hauptzugfeder 29.

Auf dem Fördermittel 22 ist eine Antriebsvorrichtung 23 angebracht. Die Stange 25 ist mit einer Anzahl von elastischen Walzen 30 versehen. In diesem Fall beträgt der Abstand zwischen den elastischen Walzen 30 eine Rollpalettenlänge 18.

Fig. 11 zeigt einen Schnitt durch die eben beschriebene elastische Walze 30 in Grundstellung.

Die elastische Walze 30 wird durch die auf der Steuerstange 27 und auf der Hauptstange 26 angebrachten Anschläge 35 und 34 gesperrt und nach oben gedrückt. In dieser Stellung kann die elastische Walze 30, sobald der Kontakt zu einer Rollpalette 17 besteht, diese je nach Bedarf entweder ins Kanallager 21 fördern oder dem Fördermittel 22 zuführen.

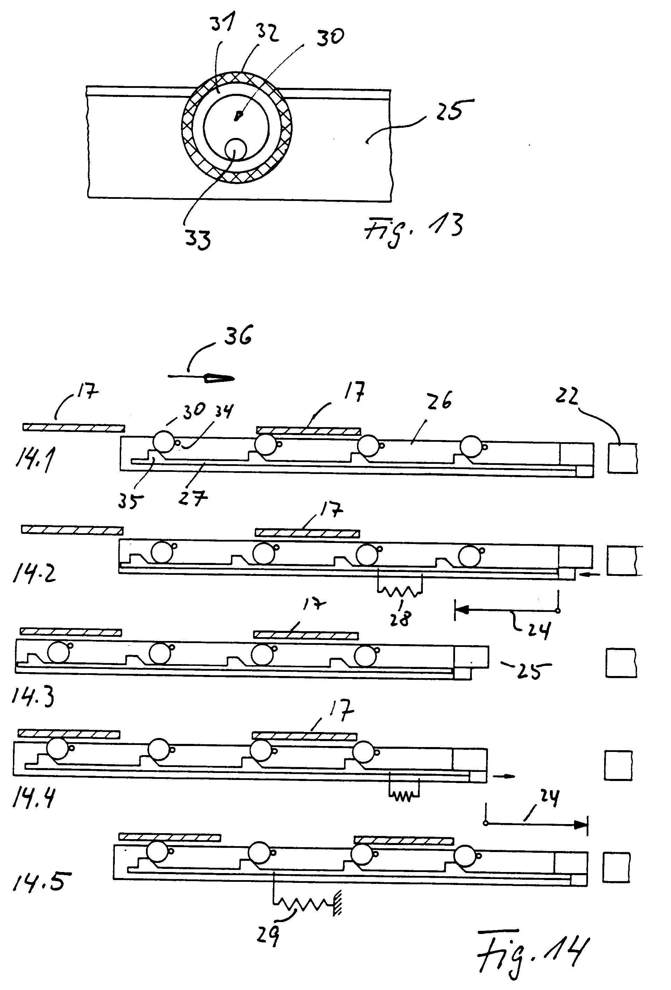

Fig. 12 zeigt einen Schnitt durch die elastische Walze 30 während eines Leerhubs. Die Steuerstange 27 ist entgegen der Wirkung der Zugfeder 28 bewegt worden, wodurch sich der auf der Steuerstange 27 angebrachte Anschlag 35 von der elastischen Walze 30 entfernt und diese Walze 30 nach unten hängt. Aus den Fig. 11 und 12 wird ersichtlich, daß eine Relativbewegung der Steuerstange 27 zur Hauptstange 26 das Fördern von Rollpaletten 17 in zwei entgegengesetzte Richtungen ermöglicht.

Die elastische Walze 30 besteht in dieser Ausführungsform aus einer Nabe 31 aus Kunststoff, die mit einem elastischen Belag 32 in Form eines Elastomerringes umgeben ist. Die Walze 30 ist mittels eines Bolzens 33 an der Stange 25 frei drehbar gelagert. Da der Innendurchmesser der Nabe 31 größer ist als der Durchmesser des Bolzens 33, ist ein gewisses Spiel vorhanden. Der Aufbau der Walze ist in Fig. 13 dargestellt.

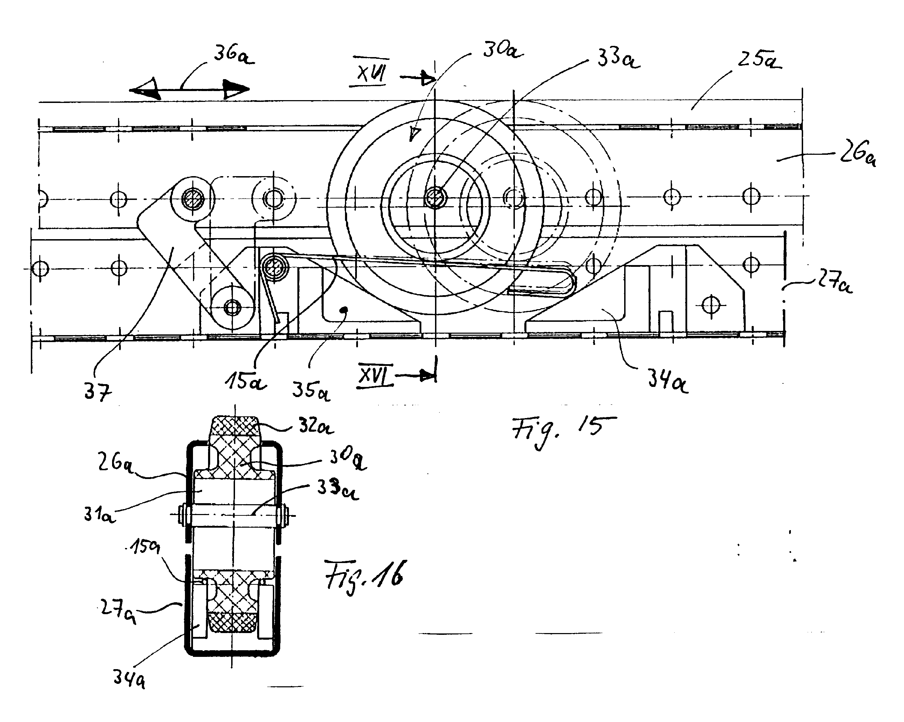

In der Fig. 14 werden zwei Rollpaletten 17 vom Kanallager 21 zum Fördermittel 22 gefördert. Die verschiedenen Stadien werden dargestellt.

In Fig. 14.1 befindet sich die Stange 25 in Grundstellung.

In Fig. 14.2 ist die Steuerstange 27 entgegen der Zugfeder 28 bewegt worden.

In Fig. 14.3 wird die Stange 25 entgegen der Förderrichtung 36 um eine Hublänge 24 angetrieben.

In Fig. 14.4 kehrt die Steuerstange 27 unter der Wirkung der Zugfeder 28 in ihre Grundstellung zurück. Die elastische Walze 30 die sich unter der Rollpalette 17 befindet, wird durch den Anschlag 35 gesperrt.

In Fig. 14.5 kehrt die Stange 25 unter der Wirkung der Hauptzugfeder 29 in ihre Ausgangsstellung zurück. Die Rollpalette 17 wird somit um die Hublänge 24 der Stange 25 in Richtung Fördermittel 22 weitergefördert.

Das Bewegen der Steuerstange 27 entgegen der Zugfeder 28 wiederholt den in Fig. 14.2 beschriebenen Vorgang.

Hierdurch ist der Vorgang der Entnahme einer Rollpalette 17 durch ein Fördermittel 22 aus dem Kanallager 21 beschrieben.

Durch Ausführung der Verfahrensschritte in einer anderen Reihenfolge, kann mit derselben Vorrichtung die Eingabe einer Rollpalette 17 vom Fördermittel 22 in den Kanal 20 bewerkstelligt werden.

In Fig. 15 und 16 ist ein weiteres abgewandeltes Ausführungsbeispiel dargestellt, wobei die Bezugszeichen in der Beschreibung der Figuren 10 bis 14 entspricht, soweit funk tionsmäßig die gleichen Elemente betroffen sind, ergänzt durch den kleinen Buchstaben "a".

Die Stange 25a wird hier von der Schubstange 26a (Hauptstange) und der Steuerstange 27a gebildet, wobei die Schub stange 26a eine Mehrzahl von elastischen Walzen 30a aufweist.

Als Anschläge sind im Ausführungsbeispiel gemäß den Figuren 15 und 16 Auflaufkeile 34a und 35a an der Steuerstange 27a vorgesehen, die jeweils in einer der Förderrichtungen (Pfeil 36) die notwendigen Schrägen aufweisen. Über Federn 15a wird jede Rolle 30a nach oben über das Niveau der Schubstange 26a angehoben, wie sich dies aus Fig. 15 ergibt. Schubstange 26a und Steuerstange 27a sind über Schwenkhebel 37 miteinander verbunden.

Um jeder Einbausituation gerecht werden zu können, sind Schubstange 26a und Steuerstange 27a aus gefalzten Lochblechen gefertigt, das in Fig. 15 lediglich angedeutet ist. Erkennbar kann mit dieser Variante in zwei Förderrichtungen gemäß Pfeil 36a gefördert werden, in Fig. 15 ist eine Walze 30a in beiden Förderpositionen dargestellt.

Natürlich ist das beschriebene Ausführungsbeispiel der Erfindung noch in vielfacher Hinsicht abzuändern, z.B. einfachere Gestaltung der Vorderrollen und dgl. mehr, ohne den Grundgedanken zu verlassen, so ist die Erfindung insbesondere nicht auf die hier dargestellte spezielle körperliche Gestaltung der Steuerstange beschränkt.

Bezugszeichenliste

| | (Fig. 1 - 9) | (Fig. 10 - 14) | (Fig. 15, 16) |
|---|---|---|---|
| Rollpalette | 2 | 17 | - |
| Rollpalettenlänge | 3 | 18 | - |
| Laufschienen | 4 | 19 | - |
| Kanal | - | 20 | - |
| Kanallager | - | 21 | - |
| Fördermittel | - | 22 | - |
| Antriebsvorrichtung | - | 23 | - |
| Hublänge | 7 | 24 | - |
| Stange | 6 | 25 | - |
| Haupt-, Schubstange | - | 26 | 26a |
| Steuerstange | - | 27 | 27a |
| Zugfeder | - | 28 | - |
| Hauptzugfeder | 8 | 29 | - |
| elastische Walze | 11 | 30 | 30a |
| Nabe | 12 | 31 | 31a |
| Elastischer Belag | 13 | 32 | 32a |
| Bolzen | 14 | 33 | 33a |
| Walzenfeder | 15 | - | 15a |
| Anschlag Hauptstange | - | 34 | - |
| Sperre Steuerstange | 16 | 35 | 35a |
| Förderrichtung | 9 | 36 | 36a |

**Patentansprüche**

1. Vorrichtung zum Fördern und zur Regulierung des Förderverlaufes von Rollpaletten bzw. Rolluntersätzen (2), die wenigstens eine in Rollrichtung außerhalb von Laufschienen (4) für die Rollen der Rollpaletten (2) angeordnete ebene Fläche auf ihrer unteren Seite aufweisen, wobei die Vorrichtung zwischen den Laufschienen (4) angeordnet ist und eine mit einer Mehrzahl von in Kontakt mit der Palette (2) bringbaren Schubelementen (11,30,30a) ausgerüstete, periodisch bewegbare Schubstange (6) und einen Antrieb für diese Schubstange aufweist,
dadurch gekennzeichnet,
daß die Schubelemente als in der Förderbewegung die untere ebene Fläche der Paletten (2) kontaktierende, elastische Walzen (11,30,30a) ausgebildet sind, wobei diese Walzen in Schubrichtung in ihrer Rollbewegung von die Walzen kontaktierenden Sperren (16,35,35a) gehindert sind.

2. Vorrichtung nach Anspruch 1,
dadurch gekennzeichnet,
daß die Sperren (16,35,35a) als bewegbare, in Kontakt mit den Walzen (11,30,30a) bringbare Keil-Anschläge ausgebildet sind.

3. Vorrichtung nach Anspruch 1 oder 2,
dadurch gekennzeichnet,
daß die Keil-Anschläge an einer getrennt zur Schubstange (26) individuell bewegbaren Steuerstange (27) angeordnet sind.

4. Vorrichtung nach einem der vorangehenden Ansprüche,
dadurch gekennzeichnet,
daß die Walzen (11,30,30a) mittels eines Bolzens (14,33, 33a) drehbar an der Schubstange (6,27) gelagert sind, wobei der Bolzen einen kleineren Durchmesser als der wirksame Innendurchmesser der Walzennabe (12,31,31a) aufweist.

5. Vorrichtung nach Anspruch 4,
dadurch gekennzeichnet,
daß die Walzen (11,30a) mittels einer Feder (15,15a) an der Schubstange gelagert sind, wobei die Feder die Walze in der unbelasteten Lage nach oben in die Kontaktierungsfläche zur Palette (17) hebt.

6. Vorrichtung nach einem der vorangehenden Ansprüche,
dadurch gekennzeichnet,
daß jeder Walze (11,30,30a) ein der Bremskeilfläche wirkmäßig gegenüberliegender, weiterer Anschlag (34,34a) zugeordnet ist.

7. Vorrichtung nach Anspruch 6,
dadurch gekennzeichnet,
daß der Keil-Anschlag (35) an der Steuerstange (27) auf der dem Fördermittel abgewandten Seite einer elastischen Walze (30) und der weitere Anschlag (34) an dar Schubstange (26) an der dem Fördermittel zugewandten Seite der jeweiligen Walze angeordnet ist.

8. Vorrichtung nach Anspruch 7,
dadurch gekennzeichnet,
daß jede Walze (30a) an der individuell bewegbaren Schubstange (26a) angeordnet ist und das die gegenüberliegenden, jederseits zugeordneten beiden entgegengesetzt geneigten Keilanschläge (34a,35a) an der Steuerstange (27a) vorgesehen sind, wobei jede Walze (30a) mittels einer Feder (15a) in Kontaktrichtung auf die Palettenunterseite hin beaufschlagt ist.

9. Vorrichtung nach einem der vorangehenden Ansprüche,
dadurch gekennzeichnet,
daß die Schubstange (26) und die Steuerstange (27) über elastische Mittel, insbesondere über Zugfedern (28,29) miteinander verbunden sind und Antriebe aufweisen, die die Schubstange und die Steuerstange individuell gegen die Kraft der Feder zu bewegen in der Lage sind.

10. Vorrichtung nach einem der vorangehenden Ansprüche,

dadurch gekennzeichnet,

daß die Walzen (11,30,30a) aus einem gut gleitenden Kunststoffmaterial bestehen und mit Belägen (13,32,32a) aus einem elastischen Material, insbesondere aus einem Elastomer, versehen sind.

## Claims

1. Apparatus for conveying and for regulating the conveying progress or rolling pallets or rolling supports (2) which on their underneath side have at least one flat surface which is arranged in the rolling direction outside rails (4) for the rolls of the rolling pallets (2), wherein the apparatus is arranged between the rails (4) and has a periodically movable thrust rod (6) which is equipped with a plurality of thrust elements (11, 30, 30a) which can be brought into contact with the pallet (2), and a drive for said thrust rod, characterised in that the thrust elements are in the form of elastic rollers (11, 30, 30a) which in the conveying movement contact the underneath flat surface of the pallets (2), wherein in the thrust direction said rollers are impeded in their rolling movement by lock members (16, 35, 35a) which contact the rollers.

2. Apparatus according to claim 1 characterised in that the lock members (16, 35, 35a) are in the form of movable wedge abutments which can be brought into contact with the rollers (11, 30, 30a).

3. Apparatus according to claim 1 or claim 2 characterised in that the wedge abutments are arranged on a control rod (27) which is individually movable separately relative to the thrust rod (26).

4. Apparatus according to one of the preceding claims characterised in that the rollers (11, 30, 30a) are mounted rotatably on the thrust rod (6, 27) by means of a pin (14, 33, 33a), wherein the pin is of a smaller diameter than the operative inside diameter of the roller hub (12, 31, 31a).

5. Apparatus according to claim 4 characterised in that the rollers (11, 30a) are mounted on the thrust rod by means of a spring (15, 15a), wherein the spring lifts the roller upwardly in the unloaded condition into the contacting surface relative to the pallet (17).

6. Apparatus according to one of the preceding claims characterised in that associated with each roller (11, 30, 30a) is a further abutment (34, 34a) which is operatively disposed in opposite relationship to the braking wedge surface.

7. Apparatus according to claim 6 characterised in that the wedge abutment (35) is arranged on the control rod (27) on the side of an elastic roller (30), which is remote from the conveyor means, and the further abutment (34) is arranged on the thrust rod (26) at the side of the respective roller, which is towards the conveyor means.

8. Apparatus according to claim 7 characterised in that each roller (30a) is arranged on the individually movable thrust rod (26a) and the two oppositely disposed oppositely inclined wedge abutments (34a, 35a) associated on each side are provided on the control rod (27a), wherein each roller (30a) is urged in the contact direction towards the pallet underside by means of a spring (15a).

9. Apparatus according to one of the preceding claims characterised in that the thrust rod (26) and the control rod (27) are connected together by way of elastic means, in particular by way of tension springs (28, 29), and have drives which are capable of moving the thrust rod and the control rod individually against the force of the spring.

10. Apparatus according to one of the preceding claims characterised in that the rollers (11, 30, 30a) comprise a plastics material which slides well and are provided with coverings (13, 32, 32a) of an elastic material, in particular an elastomer.

## Revendications

1. Dispositif pour le transport et le réglage du transport de palettes à roues ou de supports à roues (2) qui comprennent au moins une surface plane sur leur côté inférieur, disposée dans la direction du roulement à l'extérieur de rails (4) destinés aux roues des palettes (2), le dispositif étant disposé entre les rails (4) et comprenant une tige de poussée (6) pouvant être déplacée périodiquement et équipée de plusieurs éléments de poussée (11, 30, 30a) pouvant être amenés en contact avec la palette (2), et un dispositif d'entraînement pour cette tige de poussée,

caractérisé en ce que les éléments de poussée sont constitués sous forme de rouleaux élastiques (11, 30, 30a) qui viennent en contact, pendant le mouvement d'avance, avec la surface plane inférieure des palettes (2), ces rouleaux étant arrêtés dans leur mouvement de roulement dans la direction de la poussée par des blocs d'arrêt (16, 35, 35a) qui viennent en contact avec les rouleaux.

2. Dispositif selon la revendication 1,

caractérisé en ce que les blocs d'arrêt (16, 35, 35a) sont constitués sous forme de butées en forme de coins mobiles et pouvant être amenés en contact avec les rouleaux (1111).

3. Dispositif selon la revendication 1 ou 2,

caractérisé en ce que les butées en forme de coins sont disposées sur une tige de commande (27) pouvant être déplacée individuellement et séparée de la tige de poussée (26).

4. Dispositif selon l'une quelconque des revendications précédentes,

caractérisé en ce que les rouleaux (11, 30, 30a) sont montés de façon rotative sur la tige de poussée (6, 27) au moyen d'un tourillon (14, 33, 33a), le tourillon ayant un diamètre plus petit que le diamètre interne effectif du moyeu (12, 31, 31a) du rouleau.

5. Dispositif selon la revendication 4,

caractérisé en ce que les rouleaux (11, 30a) sont montés au moyen d'un ressort (15, 15a) sur la tige de poussée, le ressort soulevant les rouleaux vers le haut, dans la position non chargée, contre la surface de contact de la palette (17).

6. Dispositif selon l'une quelconque des revendications précédentes,

caractérisé en ce qu'à chaque rouleau (11, 30, 30a) est associée une autre butée (34, 34a) qui est à l'opposé et qui agit en tant que surface de freinage inclinée.

7. Dispositif selon la revendication 6,

caractérisé en ce que la butée en forme de coin (35) est montée sur la tige de commande (27) sur le côté d'un rouleau élastique (30) qui est à l'opposé du moyen transporteur et l'autre butée (34) est montée sur la tige de poussée (26) sur le côté du rouleau respectif qui est tourné vers le moyen transporteur.

8. Dispositif selon la revendication 7,

caractérisé en ce que chaque rouleau (30a) est monté sur la tige de poussée (26a) qui peut être déplacée individuellement et en ce que les deux surfaces (34a, 35a) des coins qui sont inclinées en sens inverse l'une par rapport à l'autre sont prévues sur la tige de commande (27a), chaque rouleau (30a) étant sollicité par un ressort (15a) dans la direction établissant un contact avec le côté inférieur de la palette.

9. Dispositif selon l'une quelconque des revendications précédentes,

caractérisé en ce que la tige de poussée (26) et la tige de commande (27) sont reliées l'une à l'autre par des moyens élastiques et en particulier par des ressorts de traction (28, 29), et comprennent des mécanismes d'entraînement qui sont à même de déplacer la tige de poussée et la tige de commande individuellement à l'encontre de la force des ressorts.

10. Dispositif selon l'une quelconque des revendications précédentes,

caractérisé en ce que les rouleaux (11, 30, 30a) sont constitués en une matière synthétique à bonnes caractéristiques de glissement et sont munis de revêtements (13, 32, 32a) en un matériau élastique et notamment en un élastomère.

Fig. 1

15　　　14　13　　　12　16　6

A

A

**Fig. 2**

11

EP 0 391 071 B1

13

12

**Schnitt A-A**

14

15

6

**Fig. 3**

Fig. 4

Fig. 5

Fig. 6

Fig. 7

Fig. 8

Fig. 9

Fig. 10

Fig. 11

Fig. 12

Fig. 13

14.1

14.2

14.3

14.4

14.5

Fig. 14

36a

XVI

30a    33a    25a

26a

27a

37    15a    35a    XVI    34a

Fig. 15

32a

26a    30a

33a

31a

15a

27a

34a

Fig. 16

EP 0 391 071 B1